# EUROPEAN PATENT APPLICATION

(11) **EP 4 197 783 A1**
(43) Date of publication of application: **21.06.2023**
(21) Application number: 21215523.8
(22) Date of filing: 17.12.2021
(51) Int. Cl.: B32B 27/08, B32B 27/36, C08J 5/18

(54) **AT LEAST PARTIALLY BIOBASED LAYERED STRUCTURE WITH GOOD FLAME RESISTANCE**

(71) Applicant: Covestro Deutschland AG, 51373 Leverkusen (DE)
(72) Inventor: DEIVARAJ, Theivanayagam, 41540 Dormagen (DE); HERMANNS, Norbert, 41540 Dormagen (DE); POPHUSEN, Dirk, 51467 Bergisch Gladbach (DE); KUENZEL, Roland, 51381 Leverkusen (DE); PUDLEINER, Heinz, 47800 Krefeld (DE); HOVESTADT, Wieland, 42799 Leichlingen (DE)
(74) Representative: Levpat

(57) **Abstract**

The invention is related to a layered structure (S), comprising at least:
(A) a first layer (A) comprising a polymer (a), preferably a poly-condensate or a co-poly-condensate, especially preferably a polycarbonate or a copolycarbonate, wherein the polymer comprises a diol component (D);
(B) a second layer (B) comprising a polymer (b), preferably a poly-condensate or a co-poly-condensate, especially preferably polycarbonate or a copolycarbonate, wherein the polymer comprises a diol component (D1);

wherein the diol component (D) of the first layer (A) comprises isosorbide in an amount of at least 48 wt.-%, preferably in a range of 48 to 80 wt.-%, based on the total weight of the diol component (D) of the first layer (A) and
wherein the diol component (D1) of the second layer (B) comprises isosorbide in an amount of ≤ 30 wt.- %, more preferably ≤ 10 wt.-%, especially preferably ≤ 5 wt.-%, based on the total weight of the diol component (D1) of the second layer (B) as well as the production process of such a layered structure (S) and its use.

## Description

The invention is related to a layered structure (S), comprising at least a first layer (A) comprising a polymer (a), preferably a polycondensate or a copolycondensate, especially preferably a polycarbonate or a copolycarbonate, wherein the polymer (a) comprises a diol component (D) which partially comprises isosorbide in an amount of at least 48 wt.-%, preferably in a range of 48 to 80 wt.-%, based on the total weight of the diol component (D); a second layer (B) comprising a polymer (b), preferably a polycondensate or a copolycondensate, especially preferably a polycarbonate or a copolycarbonate comprising a diol component (D1) which comprises isosorbide in an amount of less than 48 wt.-%, preferably less than 30 wt.-%, more preferably less than 10 wt.-%, especially preferably less than 5 wt.-%, based on the total weight of the diol component (D1). Also, the production process and the use of the layered structure (S) according to the invention is related to the invention.

Polymeric layered structures are used in many application fields. As sustainability of polymeric materials become more and more a prerequisite for their applicability, there exists a need for polymeric structures which are petro-based. However, especially if the polymeric structures are used in the public, an important requirement of the polymeric material is sufficient flame resistance. Known biobased materials, for example those described in US2010/0190953A1, often fail this requirement. Therefore, it exists a need of biobased materials that provide a sufficient flame resistance.

One object of the invention was to diminish at least one disadvantage of the prior art at least partially. A further object of the invention was to provide polymeric layered structures which are at least partly based on biobased material, but have a good flame resistance.

A first aspect of the invention refers to a layered structure (S), comprising at least:
(A) a first layer (A) comprising a polymer (a), preferably a poly-condensate or a co-poly-condensate, especially preferably a polycarbonate or a copolycarbonate, wherein the polymer (a) comprises a diol component (D);
(B) a second layer (B) comprising a polymer (b), preferably a poly-condensate or a co-poly-condensate, especially preferably a polycarbonate or a copolycarbonate, wherein the polymer (b) comprises a diol component (D1);
wherein the diol component (D) comprises isosorbide in an amount of at least 48 wt.-%, preferably in a range of 48 to 80 wt.-%, based on the total weight of the diol component (D) and the diol component (D1) comprises isosorbide in an amount of ≤ 30 wt.-%, more preferably ≤ 10 wt.-%, especially preferably ≤ 5 wt.-%, based on the total weight of the diol component (D1).

The layered structure (S) is preferably a flat structure, preferably having a length in a range of from 10 mm to 2000 m, more preferably of from 50 mm to 500 m, even more preferably of from 100 mm to 100 m, especially preferably of from 0.3 m to 1.5 m and a width in a range of from 10 mm to 10 m, more preferably of from 50 mm to 5 m, most preferably of from 100 mm to 2 m. The layered structure (S) preferably has an aspect ratio of length or width to thickness in a range of from 1000:1 to 1000000:1, more preferably from 2000:1 to 500000:1, even more preferably from 5000:1 to 100000:1.

According to the invention, flat structure means that its extension in the plane is many times greater than its thickness. The surface of the layered structure may be even or textured. A textured surface will also be called flat structure if not specified differently.

The first layer (A) (A) is preferably flat, preferably having a length in a range of from 10 mm to 2000 m, more preferably of from 50 mm to 500 m, even more preferably of from 100 mm to 100 m, especially preferably of from 0.3 m to 1.5 m and a width in a range of from 10 mm to 10 m, more preferably of from 50 mm to 5 m, most preferably of from 100 mm to 2 m. The first layer (A) preferably has an aspect ratio of length or width to thickness in a range of from 1000:1 to 1000000:1, more preferably from 2000:1 to 500000:1, even more preferably from 5000:1 to 100000:1.

The second layer (B) is preferably flat, preferably having a length in a range of from 10 mm to 2000 m, more preferably of from 50 mm to 500 m, even more preferably of from 100 mm to 100 m, especially preferably of from 0.3 m to 1.5 m and a width in a range of from 10 mm to 10 m, more preferably of from 50 mm to 5 m, most preferably of from 100 mm to 2 m. The second layer (B) preferably has an aspect ratio of length or width to thickness in a range of from 1000:1 to 1000000:1, more preferably from 2000:1 to 500000:1, even more preferably from 5000:1 to 100000:1.

Preferably, the layers (A) and (B) have a dimension in the range of from 1 cm² to 100 m², more preferably of from 2 cm² to 50 m², even more preferably of from 5 cm² to 10 m². The difference of the sizes of the two layers (A) and (B) is preferably no more than ± 10 %, more preferably no more than ± 5 %, based on the size of layer (A).

The total amount of isosorbide in the first layer (A) is preferably in a range of from 40 to 80 wt.-%, more preferably 45 to 75 wt.-%, most preferably 48 to 72 wt.-%, based on the total weight of the first layer (A).

The total amount of isosorbide in the second layer (B) is preferably in a range of from 0 to 40 wt.-%, more preferably 0 to 20 wt.-%, most preferably 0 to 10 wt.-%, based on the total weight of the second layer (B).

The diol component (D) further comprises diols which are different from isosorbide. Preferably, the diol component (D) further comprises cyclohexane-1,4-diyl)dimethanol. The ratio of isosorbide to cyclohexane-1,4-diyl)dimethanol of the diol component (D) preferably lies in a range of from 80:20 to 60:40, more preferably from 70:30 to 50:50, especially if no further diols are used. Preferably the diol component (D) comprises cyclohexane-1,4-diyl)dimethanol in an amount of from 20 to 52 wt.-%, more preferably of from 25 to 50 wt.-%, especially preferably from 30 to 40 wt.-%, based on the total weight of the diol component (D).

Furthermore, aliphatic, cycloaliphatic or araliphatic diols with 2 to 16 C atoms are preferably used as the diol component (D) of the poly- or copolycondensate in addition to the isosorbide, such as ethylene glycol, diethylene glycol, 1,2-propanediol, 1,3-propanediol, neopentyl glycol, 1,4-butanediol, 1,5-pentanediol, 1,6-hexanediol, p-xylenediol and mixtures of at least two of the above compounds, preferably etyleneglycol, diethyleneglycol, 1,4-butanediol and mixtures of at least two of the above compounds. Preferably the diol component (D) comprises one of the aforementioned additional diols in an amount of from 0 to 20 wt.-%, more preferably of from 2 to 10 wt.-%, especially preferably from 3 to 8 wt.-%, based on the total weight of the diol component (D).

The diol component (D) may still contain up to 10 mol% of other aliphatic diols with 3 to 12 C atoms or cycloaliphatic diols with 6 to 21 C atoms, such as 2-ethylpropanediol-1,3, 3-methylpentanediol-2,4, 2-methylpentanediol-2,4, 2,2,4-trimethylpentanediol-1, 3 and 2-ethylhexanediol-1,6, 2,2-diethylpropanediol-1,3, hexanediol-2,5, 1,4-di-([beta]-hydroxyethoxy)-benzene, 2,2-bis-(4-hydroxycyclohexyl)-propane, 2,4-dihydroxy-1,1,3,3-tetramethyl-cyclobutane, 2,2-bis-(3-[beta]-hydroxyethoxyphenyl)-propane and 2,2-bis-(4-hydroxypropoxyphenyl)-propane (cf. DE 25 07 674, DE 25 07 776, DE 27 15 932), 1,4:3,6-dianhydro-D-sorbitol (isosorbide), and 2,4,8,10-tetra-oxaspiro[5.5]undecane-3,9-diethanol as well as mixtures of at least two of the above compounds.

The diol component (D1) comprises isosorbide preferably in a range of from 0 to 30 wt.-%, more preferably in a range of from 0 to 20 wt.-%, even more preferably in a range of from 0.1 to 10 wt.-%, based on the total weight of the diol component (D1).

The diol component (D1) further comprises diols which are different from isosorbide. Preferably, the diol component (D1) further comprises cyclohexane-1,4-diyl)dimethanol. The ratio of isosorbide to cyclohexane-1,4-diyl)dimethanol of the diol component (D1) preferably lies in a range of from 20:80 to 40:60, more preferably from 30:70 to 50:50, especially if no further diols are used. Preferably the diol component (D1) comprises cyclohexane-1,4-diyl)dimethanol in an amount of from 40 to 100 wt.-%, more preferably of from 50 to 90 wt.-%, especially preferably from 60 to 80 wt.-%, based on the total weight of the diol component (D1). Additionally or alternatively aliphatic, cycloaliphatic or araliphatic diols with 2 to 16 C atoms are preferably used as the diol component (D1) of the poly- or copolycondensate, such as ethylene glycol, diethylene glycol, 1,2-propanediol, 1,3-propanediol, neopentyl glycol, 1,4-butanediol, 1,5-pentanediol, 1,6-hexanediol, p-xylenediol and mixtures of at least two of the above compounds, preferably etyleneglycol, diethyleneglycol, 1,4-butanediol and mixtures of at least two of the above compounds. Preferably the diol component (D1) comprises one of the aforementioned additional diols in an amount of from 1 to 20 wt.-%, more preferably of from 2 to 10 wt.-%, especially preferably from 3 to 8 wt.-%, based on the total weight of the diol component (D1).

The diol component (D1) may still contain up to 10 mol% of other aliphatic diols with 3 to 12 C atoms or cycloaliphatic diols with 6 to 21 C atoms, such as 2-ethylpropanediol-1,3, 3-methylpentanediol-2,4, 2-methylpentanediol-2,4, 2,2,4-trimethylpentanediol-1, 3 and 2-ethylhexanediol-1,6, 2,2-diethylpropanediol-1,3, hexanediol-2,5, 1,4-di-([beta]-hydroxyethoxy)-benzene, 2,2-bis-(4-hydroxycyclohexyl)-propane, 2,4-dihydroxy-1,1,3,3-tetramethyl-cyclobutane, 2,2-bis-(3-[beta]-hydroxyethoxyphenyl)-propane and 2,2-bis-(4-hydroxypropoxyphenyl)-propane (cf. DE 25 07 674, DE 25 07 776, DE 27 15 932), 1,4:3,6-dianhydro-D-sorbitol (isosorbide), and 2,4,8,10-tetra-oxaspiro[5.5]undecane-3,9-diethanol as well as mixtures of at least two of the above compounds.

The layered structure (S) may have any shape the person skilled would select for providing a layered structure (S), especially for use in an injection moulding process. Preferably, the layered structure (S) is flat. Preferably, the aspect ratio of the thickness to the plain lies in a region of from 1:100 to 1:10000000, more preferably in a region of from 1:1000 to 1:1000000.

Preferably the first layer (A) provides at least one, preferably at least two, more preferably at least three, especially preferably at least four, most preferably all of the following properties:
(A1) a thickness in a range of 20 to 500 µm, preferably in a range of 30 to 3750 µm; more preferably in a range of 40 to 250 µm, measured according to DIN ISO 4593-2019-06;
(A2) a roughness R3z in a range of 0 to 30 µm, measured according to ISO 4287:1997;
(A3) a gloss value of 10 to 99, measured according to ISO 2813:2014;
(A4) a heat deflection temperature in a range of from 82 to 102°C (1.8 MPa, ISO75 - 1 / - 2);
(A5) Co-efficient of thermal expansion 6.9 x 10⁻⁵ to 7.3 x 10⁻⁵ according to ISO 11359 -2:2021.

Preferably, the first layer (A) provides one property or one property combination selected from the group consisting of (A1); (A2); (A3); (A4); (A5); (A1) and (A2); (A1) and (A3); (A1) and (A4); (A1) and (A5); (A2) and (A3); (A2) and (A4); (A2) and (A5); (A3) and (A4); (A3) and (A5); (A4) and (A5); (A1) and (A2) and (A3); (A1) and (A2) and (A4); (A1) and (A2) and (A5); (A1) and (A3) and (A4); (A1) and (A3) and (A5); (A1) and (A4) and (A5); (A2) and (A3) and (A4); (A2) and (A3) and (A5); (A2) and (A4) and (A5); (A3) and (A4) and (A5); (A1) and (A2) and (A3) and (A4); (A1) and (A2) and (A3) and (A5); (A1) and (A2) and (A4) and (A5); (A1) and (A3) and (A4) and (A5); (A2) and (A3) and (A4) and (A5); (A1) and (A2) and (A3) and (A4) and (A5) ); most preferably (A1) and (A2) and (A3) and (A4) and (A5).

The diol component (D) of the polymer (a) or the diol component (D1) of the polymer (b) is a diol that has been reacted with a diol reactive component (R). Preferably, the polymer (a) or the polymer (b) is a polycondensate or co-polycondensate.

The polycondensate or co-polycondensate of polymer (a) comprises the reaction product of the diol component (D) and the reaction product of a diol reactive component (R). The diol reactive component (R) is preferably selected from the group consisting of carbonate groups, acid groups, acid esters, amine groups, acylhalogenide, anhydride or mixtures of at least two thereof. The polycondensate or copolycondensate is preferably selected from the group consisting of an acid ester.

The polycondensate or co-polycondensate of the second layer (B) comprises the reaction product of the diol component (D1) and the reaction product of a diol reactive component (R1). The diol reactive component (R1) is preferably selected from the group consisting of acid groups, amine groups. The polycondensate or copolycondensate is preferably selected from the group consisting of carbonate groups, acid groups, acid esters, amine groups acylhalogenide, anhydride or mixtures of at least two thereof. The polycondensate or copolycondensate is preferably selected from the group consisting of an acid ester.

Preferably, the reactive component (R) is the same as the reactive component (R1).

Preferably, the polymer (a) comprises the reactive component (R) in an amount in a range of from 30 to 70 wt.-%, more preferably in a range of from 35 to 65 wt.-%, even more preferably in a range of from 40 to 60 wt.-%, based on the total amount of the polymer (a).

Preferably, the polymer (b) comprises the reactive component (R1) in an amount in a range of from 30 to 70 wt.-%, more preferably in a range of from 35 to 65 wt.-%, even more preferably in a range of from 40 to 60 wt.-%, based on the total amount of the polymer (b).

Preferably, the layered structure (S), the layered structure (S) comprises furthermore:
(C) optionally at least one third layer (C), comprising a polymer (c),
(E) a further layer (E), especially in from of a printing film, wherein the further layer (E) is in direct contact with second layer (B).

Preferably, the further layer (E) has a thickness in a range of from 5 to 500 µm, more preferably in a range of from 10 to 100 µm. The further layer (E) may comprise any polymer which the person skilled in the art would select for the purpose, e.g. as printing film.

In a preferred embodiment of the layered structure (S) the thickness of the second layer (B) is at least 50 µm, preferably at least 70 µm, more preferably at least 100 µm. Preferably, the thickness of the second layer (B) is in a range of from 50 to 500 µm, more preferably in a range of from 100 to 400 µm. Preferably, the second layer (B) provides at least one, more preferably at least two, even more preferably at least three, especially all of the following properties:
(B1) a roughness R3z in a range of 0.1 to 30 µm, measured according to ISO 4287:1997;
(B2) a gloss value of 10 to 99, measured according to ISO 2813:2014;
(B3) a heat deflection temperature in a range of from 110 to 130°C (1.8 MPa, ISO75 - 1 / - 2);
(B4) Co-efficient of thermal expansion 6.5 x 10⁻⁵ to 6.9 x 10⁻⁵ according to ISO 11359 -2:2021.

Preferably, the second layer (B) provides one property or one property combination selected from the group consisting of (B1); (B2); (B3); (B4); (B1) and (B2); (B1) and (B3); (B1) and (B4); (B2) and (B3); (B2) and (B4); (B3) and (B4); (B1) and (B2) and (B3); (B1) and (B2) and (B4); (B1) and (B3) and (B4); (B2) and (B3) and (B4); (B1) and (B2) and (B3) and (B4), especially preferably (B1) and (B2) and (B3) and (B4).

In a preferred embodiment of the layered structure (S) the thickness of the first layer (A) is at least 10 µm, more preferably at least 20 µm, even more preferably at least 30 µm, most preferably at least 50 µm. Preferably, the thickness of the first layer (A) is in a range of 10 to 500 µm, preferably in a range of from 15 to 300 µm, preferably in a range of from 20 to 150 µm, even more preferably in a range of from 25 to 100 µm, especially preferably in a range of from 30 to 50 µm.

Preferably, the thickness of the layered structure (S) is in a range of from 60 to 900 µm, more preferably in a range of from 80 to 800 µm, even more preferably in a range of from 100 to 700 µm, even more preferably of from 150 to 500 µm.

In a preferred embodiment of the layered structure (S) the ratio of the thickness of the first layer (A) to the thickness of the second layer (B) is in a range of 1:10 to 10:1, preferably 1:5 to 5:1, more preferably 2:5 to 5:2, especially preferably in a range of 1:10 to 1:1.

In a preferred embodiment of the layered structure (S) the diol component (D) of polymer (a), especially the isosorbide and optionally the diol component (D1) of polymer (b) comprises a constitutional unit derived from a dihydroxy compound represented by formula (1) and a constitutional unit derived from an alicyclic dihydroxy compound

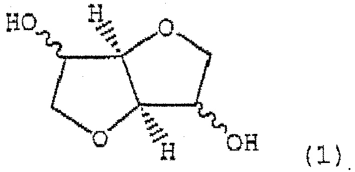

Preferably, the isosorbide is a diol, wherein the Abbe number is 50 or more and the 5% thermal reduction temperature is 340°C or more, wherein the ratio of the dihydroxy compound represented by formula (1) and the alicyclic dihydroxy compound to all dihydroxy compounds constituting the polycarbonate copolymer is 90 mol% or more, wherein the alicyclic dihydroxy compound is at least one compound selected from the group consisting of cyclohexanedimethanol, tricyclodecanedimethanol, adamantanediol and pentacyclopentadecanedimethanol

In a preferred embodiment of the layered structure (S) the second layer (B) comprises a further polymer (b'), wherein the further polymer (b') is a polycarbonate or a copolycarbonate which preferably provides constituents according to formula (2)

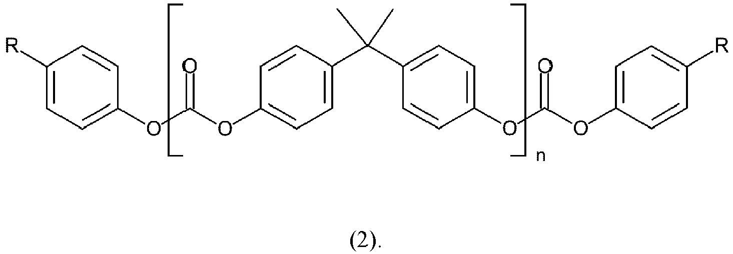

Particularly, aromatic polycarbonates or co-polycarbonates are suitable as poly or co-polycarbonates in preferred embodiments.

Polycarbonates or co-polycarbonates in the well-known way can be linear or split.

These polycarbonates can be produced in the well-known way from diphenols, carbonic acid derivatives, possibly chain breaking agents and possibly splitters. Details of the production of polycarbonates have been given in many patent specifications for approximately 40 years. By way of example, reference is made here to "Chemistry and Physics of Polycarbonates", Polymer Reviews, Volume 9, Interscience Publishers, New York, London, Sydney 1964, to D. Freitag, U. Grigo, P.R. Müller, H. Nouvertne', BAYER AG, "Polycarbonates" in Encyclopedia of Polymer Science and Engineering, Volume 11, Second edition, 1988, pages 648-718 and finally to Dres. U. Grigo, K. Kirchner and P.R. Müller "Polycarbonate" in Becker/Braun, Plastics Manual, volume 3/1, Polycarbonates, Polyacetals, Polyesters, Cellulose Esters, Carl Hanser Verlag Munich, Vienna 1992, pages 117-299.

Suitable diphenols for example can be dihydroxyaryl compounds with the general formula (I),

HO-Z-OH (I)

where Z is an aromatic residue with 6 to 34 C-atoms, which can contain one or several possibly substituted aromatic cores and aliphatic or cycloaliphatic residues and/or alkyl aryls or hetero atoms as bridge members.

Examples of suitable dihydroxyaryl compounds are: dihydroxy benzenes, dihydroxy diphenyls, bis-(hydroxyphenyl)-alkanes, bis-(hydroxyphenyl)-cycloalkanes, bis-(hydroxyphenyl)-aryls, bis-(hydroxyphenyl)-ether, bis-(hydroxyphenyl)-ketones, bis-(hydroxyphenyl)-sulfides, bis-(hydroxyphenyl)-sulfones, bis-(hydroxyphenyl)-sulfoxides, 1,1'-bis-(hydroxyphenyl)-diisopropyl benzenes, as well as their ring-alkylated and ring-halogenated compounds.

This and further suitable other dihydroxyaryl compounds are described for example in DE-A 3 832 396, FR-A 1 561 518, in H. Schnell, Chemistry and Physics of Polycarbonates, Interscience Publishers, New York 1964, pages 28 ff.; pages 102 ff. and in D.G. Legrand, J.T. Bendler, Handbook of Polycarbonate Science and Technology, Marcel Dekker New York 2000, page 72 ff..

Preferred dihydroxyaryl compounds are for example Resorcin, 4,4'-dihydroxydiphenyl, bis-(4-hydroxyphenyl)-methane, bis-(3,5-dimethyl-4-hydroxyphenyl)-methane, bis-(4-hydroxyphenyl)-diphenyl-methan, 1,1-bis (4-hydroxyphenyl)-1-phenyl-ethane, 1,1-bis (4-hydroxyphenyl)-1 (1-naphthyl)-ethane, 1,1-bis (4-hydroxyphenyl)-1-(2-naphthyl)-ethane, 2,2-bis (4-hydroxyphenyl)-propane, 2,2-bis (3-methyl-4-hydroxyphenyl)-propane, 2,2-bis (3,5-dimethyl-4-hydroxyphenyl)-propane, 2,2-bis (4-hydroxyphenyl)-1-phenyl-propane, 2,2-bis (4-hydroxyphenyl)-hexadecimal fluorine propane, 2,4-bis (4-hydroxyphenyl)-2-methyl-butane, 2,4-bis (3,5-dimethyl-4-hydroxyphenyl)-2-methyl butane, 1,1-bis (4-hydroxyphenyl)-cyclohexane, 1,1-bis (3,5-dimethyl-4-hydroxyphenyl)-cylohexane, 1,1-bis (4-hydroxyphenyl)-4-methyl-cylohexane, 1,3-bis [2 (4-hydroxyphenyl)-2-propyl]-benzene, 1,1'-bis (4-hydroxyphenyl)-3-diisopropyl-benzene, 1,1'-bis (4-hydroxyphenyl)-4-diisopropylbenzene, 1,3-bis [2 (3,5-dimethyl-4-hydroxyphenyl)-2-propyl]-benzene, bis (4-hydroxyphenyl)-ether, bis (4-hydroxyphenyl)-sulfide, bis (4-hydroxyphenyl)-sulfone, bis (3,5-dimethyl-4-hydroxyphenyl) - sulfone and 2,2', 3,3'-tetrahydro-3,3,3', 3'-tetramethyl-1,1'-spirobi [1H-indene]-5,5'-diol or dihydroxydiphenyl cycloalkane of the formula (Ia) 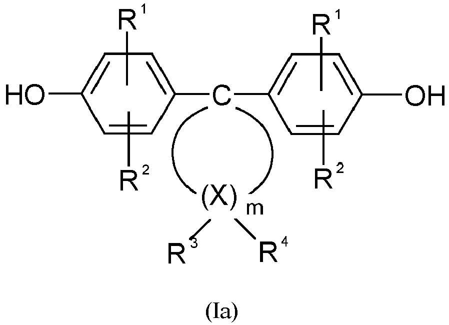 where
- R1 and R2: independent from one another mean hydrogen, halogen, preferably chlorine or bromine, C1-C8- alkyl, C5-C6 cycloalkyl, C6-C10- aryl, preferably phenyl, and C7-C12- aralkyl, preferably phenyl C1- C4- alkyl, in particular benzyl,
- m: means a whole number from 4 to 7, preferably 4 or 5,
- R³ and R⁴: for each X individually selectable, independent from one another, mean hydrogen or C₁-C ₆- alkyl and
- X: means carbon,
provided that, on at least one atom X, R³ and R⁴ simultaneously mean alkyl. Preferably, R³ and R⁴ are simultaneously alkyl on one or two atom(s) X, in particular only on one atom X in the formula (Ia).

Preferred alkyl residue for the residues of R³ and R⁴ in formula (Ia) is methyl. The X-atoms in alpha - position to the diphenyl-substituted C-atom (C-1) are preferably not dialkyl-substituted, on the other hand the alkyl disubstitution in beta position to C-1 is preferred.

Particularly preferred dihydroxydiphenyl cycloalkanes of the formula (Ia) are those with 5 and 6 ring C atoms X in the cycloaliphatic residue (m = 4 or 5 in the formula (Ia)), for example the diphenols of the formulae (Ia-1) to (Ia-3),

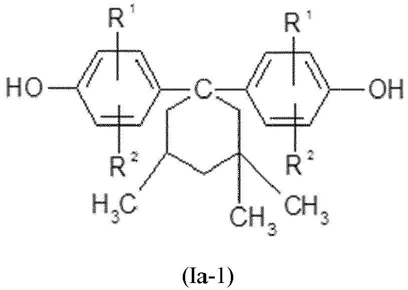

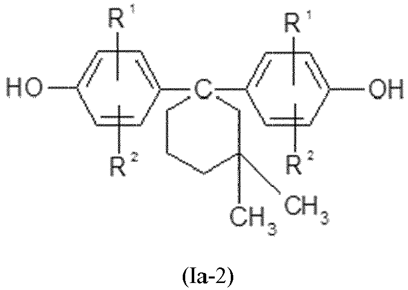

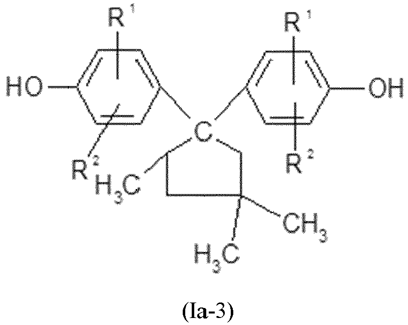

A particularly preferred dihydroxydiphenyl cycloalkane of the formula (Ia) is 1,1-bis (4-hydroxyphenyl)-3,3,5-trimethyl-cyclohexane (formula (Ia-1) with R1and R2 equal to H).

Such polycarbonates can be produced in accordance with EP-A 359 953 from dihydroxydiphenyl cycloalkanes of the formula (Ia).

Particularly preferred dihydroxyaryl compounds is Resorcin, 4,4'-dihydroxydiphenyl, bis (4-hydroxyphenyl)-diphenyl-methane, 1,1-bis (4-hydroxyphenyl)-1-phenyl-ethane, bis (4-hydroxyphenyl)-1 (1-naphthyl)-ethane, bis (4-hydroxyphenyl)-1 (2-naphthyl)-ethane, 2,2-bis (4-hydroxyphenyl)-propane, 2,2-bis (3,5-dimethyl-4-hydroxyphenyl)-propane, 1,1-bis (4-hydroxyphenyl)-cyclohexane, 1,1-bis (3,5-dimethyl-4-hydroxyphenyl)-cyclohexane, 1,1-bis (4-hydroxyphenyl)-3,3,5-trimethyl-cyclohexane, 1,1'-bis (4-hydroxyphenyl)-3-diisopropyl-benzene and 1,1'-bis-(4-hydroxyphenyl)-4-diisopropyl-benzene.

Particularly preferred dihydroxyaryl compounds are 4,4'-dihydroxydiphenyl and 2,2-bis (4-hydroxyphenyl)-propane.

Both a dihydroxyaryl compound under formation of homopolycabonates and different dihydroxyaryl compounds under formation of co-polycabonates can be used. Both a dihydroxyaryl compound of the formula (I) or (Ia) under formation of homopolycarbonates and several dihydroxyaryl compounds of the formula (I) and/or (Ia) under formation of co-polycarbonates can be used. The different dihydroxyaryl compounds can be linked together both statistically and block-by-block. In the case of co-polycabonates made from dihydroxyaryl compounds of the formulae (I) and (Ia), the molecular ratio of dihydroxyaryl compounds of the formula (Ia) to that of the other dihydroxyaryl compounds of the formula (I) possibly to be used is preferably between 99 mol % (Ia) to 1 mol % (I) and 2 mol % (Ia) to 98 mol % (I), preferably between 99 mol % (Ia) to 1 mol % (I) and 10 mol % (Ia) to 90 mol % (I) and in particular between 99 mol % (Ia) to 1 mol % (I) and 30 mol % (Ia) to 70 mol % (I).

A particularly preferred co-polycarbonate can be produced using 1,1-bis (4-hydroxyphenyl)-3,3,5-trimethyl-cyclohexane and 2,2-bis (4-hydroxyphenyl)-propane dihydroxyaryl compounds of the formulae (Ia) and (I).

Suitable carbonic acid derivatives for example can be diaryl carbonates of the general formula (II), 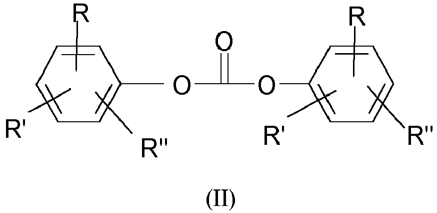 where
R, R′ and Rʺ independently directly or differently stand for hydrogen, linear or split C₁-C₃₄-alkyl, C₇-C₃₄-alkylaryl or C₆-C₃₄-aryl, R can also mean - COO-R‴, whereby R‴ stands for hydrogen, linear or split C₁-C₃₄-alkyl, C₇-C₃₄-alkylaryl or C₆-C₃₄-aryl.

Preferred diaryl carbonates are for example diphenyl carbonate, methylphenyl phenyl carbonates and di (methylphenyl) - carbonates, 4-ethylphenyl-phenyl-carbonate, di (4-ethylphenyl) - carbonate, 4-n-propylphenyl-phenyl-carbonate, di (4-n-propylphenyl) - carbonate, 4-iso-propylphenyl-phenyl-carbonate, di (4-iso-propylphenyl) - carbonate, 4-n-butylphenyl-phenyl-carbonate, di (4-n-butylphenyl) - carbonate, 4-iso-butylphenyl-phenyl-carbonate, di (4-iso-butylphenyl) - carbonate, 4-tert-butylphenyl-phenyl-carbonate, di (4-tert-butylphenyl) - carbonate, 4-n-pentylphenyl-phenyl-carbonate, di (4-n-pentylphenyl) - carbonate, 4-n-hexylphenyl-phenyl-carbonate, di (4-n-hexylphenyl) - carbonate, 4-iso-octylphenyl-phenyl-carbonate, di (4-iso-octylphenyl) - carbonate, 4-n-nonylphenyl-phenyl-carbonate, di (4-n-nonylphenyl) - carbonate, 4-cyclohexylphenyl-phenyl-carbonate, di (4-cyclohexylphenyl) - carbonate, 4 (1-methyl-1-phenylethyl) - phenyl phenyl carbonate, di [4 (1-methyl-1-phenylethyl) - phenyl] - carbonate, biphenyl-4-yl-phenyl-carbonate, di (biphenyl-4-yl) - carbonate, 4 (1-naphthyl) - phenyl phenyl carbonate, 4 (2-naphthyl) - phenyl phenyl carbonate, di [4 (1-naphthyl) - phenyl] - carbonate, di [4 (2-naphthyl) phenyl] - carbonate, 4-phenoxyphenyl-phenyl-carbonate, di (4-phenoxyphenyl) - carbonate, 3-pentadecylphenyl-phenyl-carbonate, di (3-pentadecylphenyl) - carbonate, 4-tritylphenyl-phenyl-carbonate, di (4-tritylphenyl) - carbonate, methyl salicylate phenyl carbonate, di (methyl salicylate) - carbonate, ethyl salicylate phenyl carbonate, di (ethyl salicylate) - carbonate, n-propyl salicylate-phenyl-carbonate, di (n-propyl salicylate) - carbonate, iso propyl salicylate phenyl carbonate, di (iso propyl salicylate) -carbonate, n-butyl salicylate-phenyl-carbonate, di (n-butyl salicylate) - carbonate, iso butyl salicylate phenyl carbonate, di (iso butyl salicylate) - carbonate, tert butyl salicylate phenyl carbonate, di (tert butyl salicylate) - carbonate, di (phenylsalicylat) - carbonate and di (benzylsalicylat) - carbonate.

Particularly preferred diaryl compounds are diphenyl carbonate, 4-tert-butylphenyl-phenyl-carbonate, di (4-tert-butylphenyl) - carbonate, biphenyl-4-yl-phenyl-carbonate, di (biphenyl-4-yl) - carbonate, 4 (1-methyl-1-phenylethyl) - phenyl phenyl carbonate, di [4 (1-methyl-1-phenylethyl) - phenyl] - carbonate and di (methyl salicylate) - carbonate.

Diphenyl carbonate is particularly preferred.

Both a diaryl carbonate and different diaryl carbonates can be used.

To control and/or change the final groups additionally for example one or several monohydroxyaryl compound(s) can be used as chain breaking agents, which were not used to produce the diarylcarbonate(s) employed. It can concern those of the general formula (III), 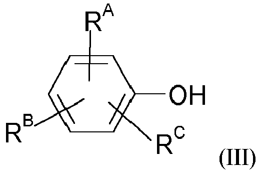 where
R^{A} stands for linear or split C₁-C₃₄-alkyl, C₇-C₃₄-alkylaryl, C₆-C₃₄-aryl or for - COO-R^{D}, whereby RD stands for hydrogen, linear or split C1-C34-alkyl, C7-C34-alkylaryl or C6-C34-aryl, and
RB, RC, independently directly or differently, stand for hydrogen, linear or split C1-C34-alkyl, C7-C34-alkylaryl or C6-C34-aryl.

Such monohydroxyaryl compounds are for example 1, 2 - or 3-methyl phenol, 2,4-dimethylphenol 4-ethyl phenol, 4-n-propylphenol, 4-iso-propylphenol, 4-n-butylphenol, 4-isobutylphenol, 4-tert-butylphenol, 4-n-pentylphenol, 4-n-hexylphenol, 4-iso-octylphenol, 4-n-nonylphenol, 3-pentadecylphenol, 4-cyclohexyl phenol, 4 (1-methyl-1-phenylethyl) - phenol, 4-Phenylphenol, 4-phenoxyphenol, 4 (1-naphthyl) - phenol, 4 (2-naphthyl) - phenol, 4-tritylphenol, methyl salicylate, ethyl salicylate, n-propyl salicylate, iso propyl salicylate, n-butyl salicylate, iso butyl salicylate, tert butyl salicylate, phenyl salicylate and benzyl salicylate, where 4-tert-butylphenol, 4-iso-octylphenol and 3-pentadecylphenol are especially preferred.

Suitable splitters are compounds with three and more functional groups, preferably such with three or more hydroxyl groups.

Suitable compounds with three or more phenolic hydroxyl groups are for example Phloroglucin, 4,6-dimethyl-2,4,6-tri (4-hydroxyphenyl) - heptene-2, 4,6-dimethyl-2,4,6-tri (4-hydroxyphenyl) - heptane, 1,3,5-tri (4-hydroxyphenyl) - benzene, 1,1,1-tri (4-hydroxyphenyl) - ethane, tri (4-hydroxyphenyl) - phenyl methane, 2,2-bis (4,4-bis (4-hydroxyphenyl) - cyclohexyl] - propane, 2,4-bis (4-hydroxyphenyl-iso propyl) - phenol and tetra (4-hydroxyphenyl) - methane.

Other suitable compounds with three and more functional groups are for example 2,4-dihydroxybenzoic acid, trimesic acid (tri chloride), cyanuric acid trichloride and 3,3-bis (3-methyl-4-hydroxyphenyl) 2-oxo-2,3 -dihydroindole.

Preferred splitters are 3,3-bis (3-methyl-4-hydroxyphenyl)-2-oxo-2,3-dihydroindole and 1,1,1-tri (4-hydroxyphenyl)-ethane.

In the case where the first layer (A) comprises less than 100 wt.-% of polymer (a), the first layer (A) preferably comprises in addition to polymer (a) a polycarbonate or copolycarbonate selected from those described in connection with the polymer (b') of the second layer (B).

Further to the diols mentioned in the connection with polymer (b'), the diol component (D) may be any diol component the person skilled in the art would select. Aliphatic, cycloaliphatic or araliphatic diols with 2 to 16 C atoms are preferably used as the diol component (D) of the poly- or copolycondensate, such as ethylene glycol, diethylene glycol, 1,2-propanediol, 1,3-propanediol, neopentyl glycol, 1,4-butanediol, 1,5-pentanediol, 1,6-hexanediol, p-xylenediol and mixtures of at least two of the above compounds, preferably etyleneglycol, diethyleneglycol, 1,4-butanediol and mixtures of at least two of the above compounds.

The diol component (D) may still contain up to 10 mol% of other aliphatic diols with 3 to 12 C atoms or cycloaliphatic diols with 6 to 21 C atoms, such as 2-ethylpropanediol-1,3, 3-methylpentanediol-2,4, 2-methylpentanediol-2,4, 2,2,4-trimethylpentanediol-1, 3 and 2-ethylhexanediol-1,6, 2,2-diethyl-propanediol-1,3, hexanediol-2,5, 1,4-di-([beta]-hydroxyethoxy)-benzene, 2,2-bis-(4-hydroxycyclohexyl)-propane, 2,4-dihydroxy-1,1,3,3-tetramethyl-cyclobutane, 2,2-bis-(3-[beta]-hydroxyethoxyphenyl)-propane and 2,2-bis-(4-hydroxypropoxyphenyl)-propane (cf. DE 25 07 674, DE 25 07 776, DE 27 15 932), 1,4:3,6-dianhydro-D-sorbitol (isosorbide), and 2,4,8,10-tetra-oxaspiro[5.5]undecane-3,9-diethanol as well as mixtures of at least two of the above compounds.

Preferably, the first layer (A) comprises polymer (b') in an amount in a range of from 0.1 to 52 wt.-%, more preferably in a range of from 0.2 to 40 wt.-%, even more preferably in a range of from 0.5 to 20 wt.-%, based on the total weight of the first layer (A).

In a preferred embodiment of the layered structure (S) the layered structure (S) comprises a third layer (C). Preferably, the third layer comprises a third polymer (c). Preferably, the composition and properties of the third polymer (c) are the same as those of polymer (b). Preferably, the composition and properties of the third layer (C) are the same as those of second layer (B).

Preferably, the third layer (C) is placed on the surface of the first layer (A) which is opposite to layer (B). Preferably, the third polymer (c) comprises the same polymeric composition as layer (B) or solely polymer (b').

In a preferred embodiment of the layered structure (S) the layered structure (S) provides at least one, preferably at least two, more preferably at least three, most preferably all of the following properties:
(S1) a thickness in a range of 75 to 500 µm, more preferably of 80 to 400 µm;
(S2) gloss level in a range of 10 to 100 GU, more preferably of 20 to 80 GU;
(S3) %LT in a range of 3 to 95 %, more preferably of 5 to 90 %;
(S4) a sufficient flame retardance according to FMVSS 302;
(S5) a heat deflection temperature in a range of from 82 to 102°C (1.8 MPa, ISO75 - 1 / - 2);
(S6) Co-efficient of thermal expansion 6.9 x 10⁻⁵ to 7.3 x 10⁻⁵.

Preferably, the layered structure (S) provides one property or one property combination selected from the group consisting of (S1); (S2); (S3); (S4); (S5); (S6); (S1) and (S2); (S1) and (S3); (S1) and (S4); (S1) and (S5); (S1) and (S6); (S2) and (S3); (S2) and (S4); (S2) and (S5); (S2) and (S6); (S3) and (S4); (S3) and (S5); (S3) and (S6); (S4) and (S5); (S4) and (S6); (S5) and (S6); (S1) and (S2) and (S3); (S1) and (S2) and (S4); (S1) and (S2) and (S5); (S1) and (S2) and (S6); (S1) and (S3) and (S4); (S1) and (S3) and (S5); (S1) and (S3) and (S6); (S1) and (S4) and (S5); (S1) and (S4) and (S6); (S1) and (S5) and (S6); (S2) and (S3) and (S4); (S2) and (S3) and (S5); (S2) and (S3) and (S6); (S2) and (S4) and (S5); (S2) and (S4) and (S6); (S3) and (S4) and (S5); (S3) and (S4) and (S6); (S3) and (S5) and (S6); (S4) and (S5) and (S6); (S1) and (S2) and (S3) and (S4); (S1) and (S2) and (S3) and (S5); (S1) and (S2) and (S3) and (S6); (S1) and (S2) and (S4) and (S5); (S1) and (S2) and (S4) and (S6); (S1) and (S2) and (S5) and (S6); (S1) and (S3) and (S4) and (S5); (S1) and (S3) and (S4) and (S6); (S1) and (S4) and (S5) and (S6); (S2) and (S3) and (S4) and (S5); (S2) and (S3) and (S4) and (S6); (S2) and (S4) and (S5) and (S6); (S3) and (S4) and (S5) and (S6); (S1) and (S2) and (S3) and (S4) and (S5); (S1) and (S2) and (S3) and (S4) and (S6); (S1) and (S2) and (S3) and (S5) and (S6); (S1) and (S2) and (S4) and (S5) and (S6); (S1) and (S3) and (S4) and (S5) and (S6); (S2) and (S3) and (S4) and (S5) and (S6); (S1) and (S2) and (S3) and (S4) and (S5) and (S6); especially preferably (S1) and (S4) and (S5) or (S1) and (S2) and (S3) or (S1) and (S2) and (S3) and (S4) or (S1) and (S2) and (S3) and (S4) and (S5) or (S1) and (S2) and (S3) and (S4) and (S5) and (S6).

Preferably, the thickness of the third layer (C) or the further (E) is independently at least 50 µm, preferably in a range of from 50 to 500 µm, more preferably in a range of from 70 to 300 µm, most preferably in a range of from 100 to 200 µm.

In a preferred embodiment of the layered structure (S) the layered structure (S), especially the first layer (A) further comprises an additive. However, also layer (C) or further layer (E) may comprise an additive. Preferably, the additive is selected from the group consisting of UV-absorbers, dyes, pigments, inorganic fillers, organic fillers, both fillers as micron, submicron or nanosized particles or mixtures of at least two thereof. Various additives can have been admixed with the polymer (a) or the polymer (b), which might be described just as polymer. If only polymer is used, all combinations of polymers, polymer (a) and/or polymer (b) and/or polymer (b') are meant.

Addition of additives serves to prolong service life or to increase colourfastness (stabilizers), to simplify processing (e.g. mould-release agents, flow aids, antistatic agents), or for adaptation of the properties of the polymer to particular stresses (impact modifiers, such as rubbers; flame retardants, colourants, glass fibres).

These additives can be added individually or in any desired mixture or in a plurality of different mixtures to the polymer, especially to the polymer melt, and specifically directly during isolation of the polymer or else after melting of pellets in what is known as a compounding step. The form in which the additives here, or a mixture of these, can be added to the polymer melt can be that of solid, of powder, or of melt. Another metering method uses masterbatches or a mixture of masterbatches of the additives, or an additive mixture.

Suitable additives are described by way of example in "Additives for Plastics Handbook, John Murphy, Elsevier, Oxford 1999", in "Plastics Additives Handbook, Hans Zweifel, Hanser, München 2001". Examples of suitable antioxidants or heat stabilizers are: alkylated monophenols, alylthiomethylphenols, hydroquinones, alkylated hydroquinones, tocopherols, hydroxylated thiodiphenyl ethers, alkylidene bisphenols, O-, N- and S-benzyl compounds, hydroxybenzylated malonates, aromatic hydroxy compounds, triazine compounds, acylaminophenols, esters of β-(3,5-di-tert-butyl-4-hydroxyphenyl)propionic acid, esters of β-(5-tert-butyl-4-hydroxy-3-methylphenyepropionic acid, esters of β-(3,5-dicyclohexyl-4-hydroxyphenyl)propionic acid, esters of 3,5-di-tert-butyl-4-hydroxyphenylacetic acid, amides of β-(3,5-di-tert-butyl-4-hydroxyphenyl)propionic acid, suitable thiosynergists, secondary antioxidants, phosphites and phosphonites, benzofuranones and indolinones.

Preference is given to organic phosphites, phosphonates and phosphanes, and mostly to those in which the organic moieties are composed entirely or to some extent of optionally substituted aromatic moieties.

Suitable complexing agents for heavy metals and for the neutralization of traces of alkali are o/m-phosphoric acids, or fully or partially esterified phosphates or phosphites.

Suitable light stabilizers (UV absorbers) are: 2-(2'-hydroxyphenyl)benzotriazoles, 2-hydroxybenzophenones, esters of substituted and unsubstituted benzoic acids, acrylates, sterically hindered amines, oxamides, 2.8. 2-(2-hydroxyphenyl)-1,3,5-triazines. Preference is given to substituted benzotriazoles.

Polypropylene glycols can be used alone or in combination with, for example, sulphones or sulphonamides, as stabilizers to inhibit damage by gamma radiation.

These and other stabilizers can be used individually or in combination and can be in any of the forms mentioned when they are added to the polymer, especially to polymer a) or polymer b).

Suitable flame-retardant additives are phosphate esters, i.e. triphenyl phosphate, resorcinol diphosphate, bromine-containing compounds, such as brominated phosphoric esters, brominated oligocarbonates and polycarbonates, and also preferably salts of fluorinated organic sulphonic acids.

Suitable impact modifiers are butadiene rubber with grafted-on styrene-acrylonitrile or methyl methacrylate, ethylene-propylene rubbers with grafted-on maleic anhydride, ethyl and butyl acrylate rubbers with grafted-on methyl methacrylate or styrene-acrylonitrile, and interpenetrating siloxane and acrylate networks with grafted-on methyl methacrylate or styrene-acrylonitrile.

Colourants can also be added, examples being organic dyes or pigments or inorganic pigments, or IR absorbers, individually, in a mixture, or else in a combination with stabilizers, with glass fibres, with (hollow) glass beads, or with inorganic fillers. It is also possible to use carbon black as additive.

Various layer-specific functions of the layers themselves can be achieved via various types of additives.

As exterior layer, the layer (A) comprising polymer a) and/or the layer (B) comprising polymer b), preferably comprises a laser-sensitive additive. A suitable additive is carbon black or a dye that absorbs infrared light. These laser sensitive additives are useful to mark the layered structure. The marking can be done in black or any colour, depending on the chosen additive and the light source or light intensity.

When standard lasers are used, specifically the widely used Nd-YAG solid-state lasers with wavelength 1.06 µm, a colour change or a colour transition takes place at the point of impact of the laser on the surface of the material, and high-clarity, high-contrast inscriptions and markings are obtained.

Particularly suitable additives are colour pigments and metal salts, copper hydroxide phosphate iriodin, a pearl-lustre pigment obtainable commercially from Merck, and especially carbon black. The amount of these additives admixed with the polymer (a) or polymer (b), preferably the polycarbonate of the invention is in particular of the order of magnitude of from a few parts per 1000 to at most 10 wt.-%, based on the total weight of polymer (a) or polymer (b) .

The polymer (a) or polymer (b), preferably the polycarbonate can also comprise further inorganic fillers. Examples of suitable inorganic fillers for achieving an opaque or translucent polycarbonate layer are conventional inorganic pigments, in particular metals or metal oxides, such as aluminum oxides, silica, titanites, and also alkali-metal salts, e.g. carbonates or sulphates of calcium or barium. Suitable particulate fillers can be homogeneous and are mainly composed of a material such as titanium dioxide or barium sulphate alone. As an alternative, at least a proportion of the filler can be heterogeneous. By way of example, there can also be a modifier admixed with the actual filler. By way of example, the actual filler can also have been provided with a surface modifier, e.g. with a pigment, with a processing aid, with a surfactant or with any other modifier, in order to improve or alter compatibility with the polycarbonate. Preferably, the polymer (a) or polymer (b), preferably the polycarbonate comprises titanium dioxide.

The amount of the said inorganic fillers in the polymer (a) or polymer (b), preferably the polycarbonate is preferably from 2 to 50 wt.-%, particularly preferably from 3 to 30 wt.-%, based on the total weight of polymer (a) or polymer (b).

Preferably, the additive is positioned in at least one of the outer layers of the layered structure (S). In the case layer (A) and/or layer (B) is one of the outer layers, the first layer (A) and/or the second layer (B) preferably comprises the additive, especially the UV-absorber in an amount of 0.1 to 10 wt.-%, more preferably of 0.5 to 7 wt.-%, most preferably of 1 to 5 wt.-%, based on the total weight of the respective layer. In the case layer (C) and/or layer (E) is one of the outer layers, the third layer (C) and/or the further layer (E) preferably comprises the additive, especially the UV-absorber in an amount of 0.1 to 10 wt.-%, more preferably of 0.5 to 7 wt.-%, most preferably of 1 to 5 wt.-%, based on the total weight of the respective layer.

A further aspect of the invention relates to a process for producing a layered structure (S), comprising at least the following steps:
I) heating a first polymer (a) or a mixture of polymer (a) and polymer (b') by an extruder,
II) heating a second polymer (b) or a mixture of polymer (b) and polymer (b') by an extruder,
III) optionally heating a third polymer (c) by an extruder,
IV) co-extruding the first polymer (a) or the mixture of polymer (a) and polymer (b') together with the second polymer (b) or the mixture of polymer (b) and polymer (b') and optionally the third polymer (c) through a dye to form a first layer (A) consisting of polymer (a) or the mixture of polymer (a) and polymer (b'), a second layer B) consisting of the second polymer (b) or the mixture of polymer (b) and polymer (b') and optionally a third layer (C) consisting of polymer (c) to result in the layered structure (S),
V) cooling the layered structure to room temperature and optionally pressing the layered structure (S) through two rolls

The extruder utilized in step I) or step II) and optionally III) could be any extruder the person skilled in the art would select for extruding polymer (a), (b), (b') or (c).

The co-extruding in step IV) is performed via a die where the melts of step I) to III) are combined. The cooling in step V) could be established by any means the person skilled in the art would select for cooling a layered structure (S). Preferably, the cooling in step V) is selected from the group consisting of cooling at room temperature (25°C), cooling via cool air (10 to 15°C), cooling in a tempered room (30 to 50°C). Preferably the cooling in step V) is established at room temperature. The layered structure (S) is preferably pressed through two rolls while cooling in step V). Preferably, the rolls are rollers having metal or rubber surfaces which are polished or textured. If the layered structure (S) should be clear and transparent two polished rollers are used. By using one polished and one textured roller a matt surface may be achieved. If two textured rollers are applied, the layered structure (S) may be formed to a less transparent structure.

The polymers (a), (b) and (b') are preferably those described in the context of the first layer (A), second layer (B) and third layer (C) to form the layered structure according to the invention above. Also, the compositions, properties of polymers A), B) and C) are selected in a way to form the compositions as described in the context of the first layer (A), second layer (B) and third layer (C) to form the layered structure according to the invention above.

The layered structure (S) formed according to the afore mentioned process comprises the preferred properties as mentioned for the layered structure (S) according to the invention as mentioned above.

In a preferred embodiment of the process the first polymer (a) has a higher content of isosorbide than the second polymer (b). Preferably, the content of isosorbide of the first polymer (a) is 1 to 100 fold higher than in the second polymer (b), more preferably 2 to 80 fold higher than in the second polymer (b), more preferably 5 to 50 fold higher than in the second polymer (b).

A further aspect of the invention relates to a layered structure (S) obtained by the process according to the invention. The layered structure (S) as well as each of its layers, the first layer (A), the second layer (B) and optionally the third layer (C) or any further layer (E) provide the same properties as described in the context of the first layer (A), second layer (B), third layer (C) and any further layer (E) to form the layered structure (S) according to the invention above.

A further aspect of the invention relates to the use of a layered structure (S) according to the invention or produced by a process according to the invention for coating surfaces, especially for coating surfaces in the interior of an automotive. The use of the layered structure (S) comprises a method of applying the layered structure (S) according to the invention or produced by a process according to the invention for coating surfaces, especially in the interior of an automotive. The method of applying can be any method the person skilled in the art would use for applying layered structures to surfaces. Preferably, the applying is selected from the group consisting of gluing, laminating, fixing by fixing elements, clamping or a combination of at least two thereof.

A further aspect of the invention relates to a coated surface obtainable by using a layered structure (S) according to the invention or produced according to the process according to the invention. The using of the layered structure (S) comprises a method of applying the layered structure (S) according to the invention or produced by a process according to the invention to a surface to be coated, especially for coated surfaces that are used in the interior of an automotive. The method of applying can be any method the person skilled in the art would use for applying layered structures to surfaces. Preferably, the applying is selected from the group consisting of gluing, laminating, fixing by fixing elements, clamping or a combination of at least two thereof

### Examples

### Methods:

### 1. Flame retardance

Flame retardance is measured according to FMVSS 302;

### 2. Thickness

The thickness has been measured according to DIN ISO 4593-2019-06;

### 3. Roughness

The roughness R3z is measured according to ISO 4287:1997;

### 4. Heat deflection temperature

The heat resistance measured according to DIN EN ISO 75-1-2013-08 (1.80MPa);

### 5. Transparency [LT%]

The transparency has been measured according to ASTM D1003;

### 6. Co-efficient of thermal expansion

The co-efficient of thermal expansion has been measured according to ISO 11359-2:2021;

### 7. Gloss value

The gloss value has been measured according to ISO 2813:2014.

### Materials used:

### Polymer (a) for forming first layer (A):

For all examples 1 to 8 the material for the first layer (A), if existing, was Durabio^{™} 7340 of Mitsubishi, Japan

### Polymer (b) for forming second layer (B):

For all examples 1 to 8 the material for the second layer (B), if existing, was
**Makrolon**^{®} **3108:** Very viscous amorphous, thermoplastic bisphenol A-polycarbonate with an MVR of 6 cm³/10min according to ISO 1133-1:2012-03 at 300°C and 1.2 kg supplied by Covestro Deutschland AG, Germany

The production of the layered structures (S) was established by extruders of the company Breyer (Germany) for heating and melting of polymer A) and for heating and melting of polymer B) to form the comparative and inventive examples 1 to 8. The temperature selected in the different phases of the extrusion are listed in table 2. The results of all examples 1 to 8 are listed in table 1.

### Example 1

### General production standard for extrusion and co-extrusion films

The plant used consists of
▪ an extruder A with a screw of 105 mm in diameter (D) and a length of 41xD for applying polymer A) to form first layer (A). The screw has a degassing zone;
▪ a coextruder B with a screw of the length 25 D and a diameter of 35 mm for applying polymer B) to form second layer (B)
▪ a reversing head;
▪ a special coextrusion nozzle 1500 mm in width;
▪ a triple roller polishing calendar with horizontal roller arrangement, whereby the third roller is tiltable by +/- 45° relative to the horizontal;
▪ a roller race;
▪ a machine for reciprocal application of a protective plastic film (C) made of polypropylene;
▪ a take-off machine;
▪ a spooling station.

Granulates of the polymer A) were fed to the main extrusion hopper. Granulates of the polymer B) were fed to the coextrusion hopper. Melting and conveying of the respective material took place in the respective cylinder/screw plastifier system. Both material melts came together in the coextrusion nozzle. The melt arrived at the polishing calendar from the nozzle. Final shaping and cooling of the material took place on the polishing calendar. The temperatures of the polishing calenders are listed in table 2. One rubber roller and one polished chrome or steek rollers were used for structuring the film surfaces. Subsequently the film was transported by a take-off machine, the protective plastic film applied on both sides, and afterwards the film was spooled.

**Table 1: results of flame retardance test of examples 1 to 8 according to method 1**

| **Example** | **Total thickness (µm)** | **Layer Thickness (µm)** | | **Result of flame retardance according to FMVSS 302** |
|---|---|---|---|---|
| | | first layer (A) | second layer (B) | |
| **1 (comparative)** | 50 | 0 | 50 | Fail |
| **2 (comparative)** | 250 | 250 µm | 0 | Fail |
| **3 (comparative)** | 375 | 375 µm | 0 | Fail |
| **4 (inventive)** | 250 | 200 µm | 50 µm | Pass |
| **5 (inventive)** | 250 | 100 µm | 150 µm | Pass |
| **6 (inventive)** | 250 | 50 µm | 200 µm | Pass |
| **7 (inventive)** | 375 | 300 µm | 75 µm | Pass |
| **8 (inventive)** | 375 | 200 µm | 175 µm | Pass |

The results in table 1 show that layered structures which comprise at least one first layer (A) and at least one second layer (B) show better flame retardance than the first layer (A) or the second layer (B) alone. In the norm FMVSS 302 the threshold of 100 mm/min is relevant for the decision of fail and pass, which has been applied in table 1. In this test, a test sample of dimension 100 mm x 356 mm is aligned horizontally and exposed to flame at one edge for about 15 seconds. The rate of flame travel between two points is measured and when it is below 100 mm / min, the sample is said to have withstood or passed the test. When the sample burns at a rate faster than 100 mm / min, then the sample is said to have failed the test. In a typical test set up, 5 samples are measured and an average rate is determined for pass / fail criteria.

Example 4 shows that a 250 µm thick layer of the first layer (A), which fails the flame retardance test could be transformed into a 250 µm layered structure which passes the flame retardance test if it is partially substituted by material of the second layer (B). This is an unexpected result as a layer just comprising the second layer (B) as shown in comparative example 1 fails the flame retardance test.

The temperatures T1 when the polymers exit the extruder and T2 when the polymers exit the dye are listed in table 2.

**Table 2: Temperatures of the materials when exiting the extruder T1 and when exiting the dye T2**

| **Example** | **first layer (A)** | | **second layer (B)** | | **polished roller** | |
|---|---|---|---|---|---|---|
| | T1 | T2 | T1 | T2 | 1 | 2 |
| **1 (comparative)** | | | 250 | 269 | rubber 1000 Grit | Steel 20 µm |
| **2 (comparative)** | 181 | 215 | | | rubber 1000 Grit | Chrome highgloss |
| **3 (comparative)** | 183 | 216 | | | rubber 1000 Grit | Chrome highgloss |
| **4 (inventive)** | 183 | 216 | 280 | 280 | rubber 1000 Grit | Chrome highgloss |
| **5 (inventive)** | 175 | 210 | 250 | 270 | rubber 1000 Grit | Chrome highgloss |
| **6 (inventive)** | 175 | 210 | 250 | 270 | rubber 1000 Grit | Chrome highgloss |
| **7 (inventive)** | 183 | 215 | 280 | 280 | rubber 1000 Grit | Chrome highgloss |
| **8 (inventive)** | 179 | 215 | 280 | 280 | rubber 1000 Grit | Chrome highgloss |

### Figures

The figures show in:
Figure 1: a schematic illustration of a layered structure (S) according to the invention
Figure 2: a scheme of the inventive process

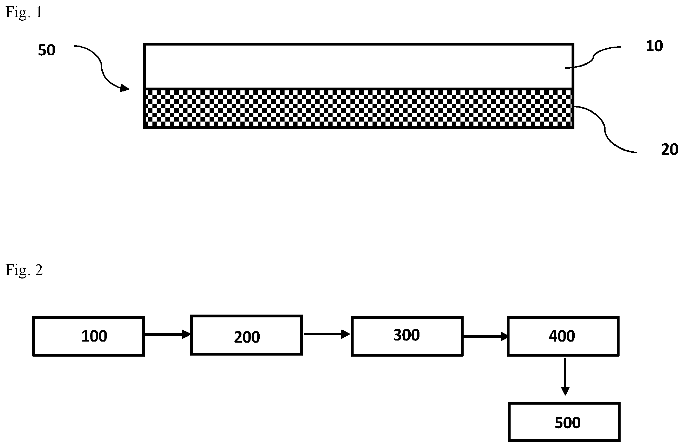

In figure 1 a layered structure (S) 50 according to the invention is shown comprising a first layer (A) 10 coextruded with a second layer (B) 20 with the materials and under the conditions as described in the process of Example 4.

In figure 2 a scheme of a process according to the invention is shown. In step I) 100 the heating of the first polymer a) is established in the extruder. In parallel or after step I) 100, the second polymer b) is heated in step II) 200, and optionally in parallel the second polymer c) is heated in step III) 300, each in a separate extruder. In step IV) 400 the heated polymers a), b) and optionally c) are co-extruded via a dye. The kind of material and the conditions are described in example 1 and in the tables 1 and 2. The thickness of the layered structure (S) lies in a range of from 150 to 1000 µm. The built layered structure (S) might optionally be pressed through two rolls to receive a flat structure (S).

## Claims

1. A layered structure (S), comprising at least:
(A) a first layer (A) comprising a polymer (a), preferably a poly-condensate or a co-poly-condensate, especially preferably a polycarbonate or a copolycarbonate, wherein the polymer (a) comprises a diol component (D);
(B) a second layer (B) comprising a polymer (b), preferably a poly-condensate or a co-poly-condensate, especially preferably polycarbonate or a copolycarbonate, wherein the polymer (b) comprises a diol component (D1);
wherein the diol component (D) comprises isosorbide in an amount of at least 48 wt.-%, preferably in a range of 48 to 80 wt.-%, based on the total weight of the diol component (D); and wherein the diol component (D1) comprises isosorbide in an amount of ≤ 30 wt.-%, more preferably ≤ 10 wt.-%, especially preferably ≤ 5 wt.-%, based on the total weight of the diol component (D1).

2. The layered structure (S) according to claim 1, wherein the thickness of the second layer (B) is at least 50 µm, preferably in a range of from 50 to 500 µm.

3. The layered structure (S) according to any of the preceding claims, wherein the thickness of the first layer (A) is at least 10 µm, preferably in a range of from 10 to 500 µm.

4. The layered structure (S) according to any of the preceding claims, wherein the ratio of the thickness of the first layer (A) to the thickness of the second layer (B) is in a range of 1:10 to 10:1.

5. The layered structure (S) according to any of the preceding claims, wherein the diol component (D) of polymer (a) and optionally the diol component (D1) of polymer (b) comprises a constitutional unit derived from a dihydroxy compound represented by formula (1) and a constitutional unit derived from an alicyclic dihydroxy compound

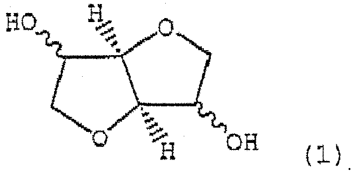

6. The layered structure (S) according to any of the preceding claims, wherein the second layer (B) comprises a further polymer (b'), wherein the further polymer (b') is a polycarbonate or a copolycarbonate and the further polymer (b') preferably provides constituents according to formula (2)

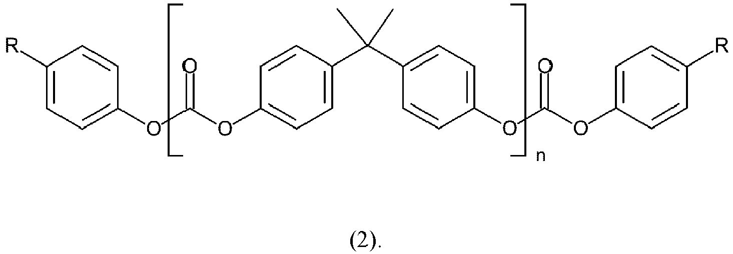

7. The layered structure (S) according to any of the preceding claims, wherein the layered structure (S) comprises a third layer (C).

8. The layered structure (S) according to any of the preceding claims, wherein the layered structure (S) provides at least one of the following properties
(S1) a thickness in a range of 75 to 500 µm, more preferably of 80 to 400 µm;
(S2) gloss level in a range of 10 to 100 GU, more preferably of 20 to 80 GU;
(S3) %LT in a range of 3 to 95 %, more preferably of 5 to 90 %.

9. The layered structure (S) according to any of the preceding claims, wherein the layered structure, especially the first layer (A) further comprises an additive, preferably selected from the group consisting of an UV-absorber, dyes, pigments, inorganic fillers, organic fillers, both fillers as micron, submicron or nanosized particles or mixtures of at least two thereof.

10. A process for producing a layered structure (S), comprising at least the following steps:
I) heating a first polymer (a) or a mixture of polymer (a) and polymer (b') by an extruder,
II) heating a second polymer (b) or a mixture of polymer (b) and polymer (b') by an extruder,
III) optionally heating a third polymer (c) by an extruder,
IV) co-extruding the first polymer (a) or the mixture of polymer (a) and polymer (b') together with the second polymer (b) or the mixture of polymer (b) and polymer (b') and optionally the third polymer (c) through a dye to form a first layer (A) consisting of polymer (a) or the mixture of polymer (a) and polymer (b'), a second layer B) consisting of the second polymer (b) or the mixture of polymer (b) and polymer (b') and optionally a third layer (C) consisting polymer (c) to result in the layered structure (S),
V) cooling the layered structure (S) to room temperature and optionally pressing the layered structure (S) through two rolls.

11. The process according to claim 10, wherein the first polymer A) has a higher content of isosorbide than the second polymer B).

12. A layered structure (S) obtained by a process according to claim 10 or 11.

13. The use of a layered structure (S) according to any of claims 1 to 9 or 12 or produced by a process according to claim 10 or 11 for coating surfaces, especially in the interior of an automotive.

14. A coated surface obtainable by using a layered structure (S) according to any of claims 1 to 9, 12 or produced according to claim 10 or 11.
